# FASCICULE DE BREVET EUROPEEN

(11) **EP 0 564 317 B1**
(45) Date de publication et mention de la délivrance du brevet: **03.07.1996**
(21) Numéro de dépôt: 93400682.6
(22) Date de dépôt: 17.03.1993
(51) Int. Cl.: B01J 37/20

(54) **Procédé de présulfuration de catalyseur de traitement d'hydrocarbures**
Verfahren zur Vorsulfidierung von Kohlenwasserstoffbehandlungskatalysatoren
Process for presulfurizing a catalyser for treating hydrocarbons

(30) Priorité: 01.04.1992 FR 9204051
(43) Date de publication de la demande: 06.10.1993
(73) Titulaire: EUROPEENNE DE RETRAITEMENT DE CATALYSEURS (en abrégé EURECAT), F-07800 LA VOULTE SUR RHONE (FR)
(72) Inventeur: Dufresne, Pierre, F-26000 Valence (FR); Le Gall, Bernard, F-07800 La Voulte sur Rhône (FR); Berrebi, Georges, F-26500 Bourg les Valence (FR)
(74) Mandataire: Andreeff, François

(56) Documents cités:
- EP-A- 0 064 429
- EP-A- 0 447 221
- EP-A- 0 448 435
- EP-A- 0 466 568
- WO-A-88/08749

## Description

La présente invention concerne un procédé de présulfuration de catalyseur de traitement d'hydrocarbures et/ou de préconditionnement d'un catalyseur pour être ensuite sulfuré.

Il est souvent souhaitable de procéder à une sulfuration (généralement appelée "présulfuration") des métaux entrant dans la composition de certains catalyseurs de raffinage et/ou d'hydroconversion d'hydrocarbures, soit lorsque ces catalyseurs sont neufs, soit à l'issue de la régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions d'hydrodésulfuration de diverses coupes pétrolières, par exemple des gas oils dont il convient avant emploi, d'abaisser la teneur en soufre pour les rendre conformes aux spécifications. De telles réactions de désulfuration sont généralement effectuées en présence d'hydrogène, la charge étant par exemple un gas oil atmosphérique distillant généralement entre 230 et 350 °C et pouvant posséder une teneur en soufre comprise entre 0,12 et 1,5 % pds. Ici, le catalyseur utilisé pour ce type d'hydrodésulfuration renferme un support généralement non acide, par exemple une alumine ou des mélanges d'alumine (brevet US-A-4 334 982) ou tout autre support adéquat à base d'au moins un oxyde d'un métal ou de métalloïde (magnésie (US-A-4 132 632. US-A-4 140 626), silice, silice-alumine, silice-magnésie, silice ou alumine fluorée, alumine-bore , argile, charbon) ce ou ces mélanges de support pouvant au moins en partie se présenter sous forme amorphe ou sous forme cristallisée (zéolite) et le catalyseur renfermant en outre 0,2 à 30 % d'au moins un métal actif des groupes VI, VIII ou autre choisi par exemple dans le groupe constitué, par le cobalt, le molybdène, le nickel et le tungstène (US-A-3 732 155 et 3 804 748). On utilise généralement un couple de deux de ces métaux, par exemple l'un des couples cobalt-molybdène, nickel-molybdène, nickel-tungstène. On peut toujours à titre d'exemple utiliser un métal noble du groupe VIII de la famille du platine : Pt, Pd... (US-A-4 098 682).

Ainsi, avant d'être utilisé, le catalyseur, neuf ou régénéré, est soumis généralement dans l'art antérieur, à une sulfuration (présulfuration) effectuée dans le réacteur d'hydrodésulfuration. Cette sulfuration permet d'inclure dans le catalyseur, par exemple, 50 à 150 % environ des quantités stoechiométriques de soufre calculées sur les quantités de sulfure de formule (selon les métaux présents) Co₉S₈, MoS₂, WS₂, Ni₃S₂.

Cette sulfuration (présulfuration) est effectuée dans l'art antérieur, à une température finale généralement comprise entre 250 et 400 °C, par un mélange d'hydrogène sulfuré généralement dilué dans de l'hydrogène (proportion d'hydrogène sulfuré dans l'hydrogène de l'ordre de 0,5 à 5 % en volume) avec une vitesse spatiale adéquate de l'ordre par exemple, de environ 1.000 à 3.000 litres de gaz dans les conditions normales de température et pression par litre de catalyseur et par heure (US-A-4 334 982). La sulfuration (ou présulfuration) proprement dite peut être effectuée par palier de température (brevet français FR-B-2 476 118). On peut utiliser divers agents de sulfuration, autres que l'hydrogène sulfuré (H₂S) et par exemple un composé sulfuré de la famille des mercaptans, le sulfure de carbone (CS₂), des sulfures, des disulfures, ou des polysulfures, les composés thiophéniques et, de préférence le diméthylsulfure (DMS) et le diméthyldisulfure (DMDS).

Mais actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qu'a permis le procédé efficace du brevet Européen EP-B-130 850 de la demanderesse dans lequel un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation du dit composé sulfuré peut, si on le désire, être effectuée à proximité de l'unité industrielle ou même sur le lieu de traitement de catalyseur ; le procédé d'incorporation du dit composé sulfuré peut être effectué en hors site également sur un catalyseur neuf ou régénéré, avant sa mise en oeuvre dans l'unité industrielle.

D'une façon plus précise dans le brevet Européen EP-B-130 850, le procédé de sulfuration du catalyseur est donc caractérisé par une étape préliminaire dite d'incorporation dans la masse catalytique, d'un composé sulfuré de nature particulière.

L'étape préliminaire d'introduction d'un composé sulfuré qu'arbitrairement on appelle prétraitement "hors-site" ou "ex-situ" qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus dans le réacteur ou au voisinage immédiat du réacteur (on écrit arbitrairement "in situ") c'est-à-dire dans des zones nécessitant d'opérer dans des conditions opératoires, (de température, pression ou autres), imposées au moins en partie par les conditions opératoires des réacteurs eux-mêmes.

En résumé, le brevet Européen EP-B-130 850 concerne un procédé permettant d'incorporer en l'absence d'hydrogène dans la porosité du catalyseur neuf ou régénéré au moins un agent de sulfuration de formule générale : R - S₍ₙ₎-R' où R, R' et n sont définis ci-dessous.

La sulfuration du catalyseur peut ainsi être faite comme suit : dans une première étape réalisée "ex-situ", en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale : R-S₍ₙ₎-R', le dit agent de sulfuration étant utilisé en solution dans un solvant : dans une deuxième étape, réalisée "in situ", et de préférence au-dessus de 150 °C, on procède à une étape d'activation du catalyseur effectuée en présence d'hydrogène, la quantité requise de soufre se fixant grâce à la présence d'hydrogène, sur le ou les métaux entrant dans la composition du dit catalyseur. Cette dernière étape est perfectionnée dans le brevet EP-G-181 254. L'objet de ces deux brevets est donc de conduire "ex situ" la présulfuration des catalyseurs en incorporant toute la quantité nécessaire de soufre et seulement la quantité nécessaire de soufre demandée par l'utilisateur. Les catalyseurs sont donc livrés à la raffinerie ou à toute autre unité, ainsi préconditionnés pour être sulfurés.

Le raffineur, ou tout autre utilisateur, n'a plus donc qu'à réactiver ce catalyseur en présence d'hydrogène à une température par exemple de 100 à 400 °C pour un catalyseur de désulfuration afin de faire réagir le soufre sur les métaux contenus et démarrer aussitôt la réaction de raffinage ou de conversion d'hydrocarbures par injection de la charge à traiter.

Dans le polysulfure de formule, R-S₍ₙ₎-R', n est un nombre entier de 3 à 20, de préférence de 3 à 8 et plus particulièrement de 5 à 7, R et R', identiques ou différents, représentent des radicaux organiques renfermant chacun 1 à 150 atomes de carbone par molécule, de préférence 2 à 60 atomes de carbone et plus particulièrement 4 à 13, ces radicaux étant choisis dans le groupe constitué par les radicaux alkyles c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéro-atome, R' éventuellement pouvant être un atome d'hydrogène.

On peut citer, à titre d'exemple préféré de polysulfure, le ditertiododécylpolysulfure (n = 5) ou R et R' sont chacun un radical tertio-dodécyle. Ce produit est commercialisé par exemple par ATOCHEM sous le nom de TPS 32, notamment parce qu'il contient 32 % poids environ de soufre.

On peut citer également le ditertiononylpolysulfure (n = 5) ou R et R' sont chacun un radical tertio-nonyle. Ce produit est commercialisé par ATOCHEM sous le nom de TPS 37 ou TNPS, notamment parce qu'il contient 37 % poids environ de soufre.

L'agent de sulfuration est utilisé dilué dans un solvant adéquat et incorporé dans le catalyseur généralement par une technique d'imprégnation. Les processus de sulfuration varient en fait selon les coupes à traiter ultérieurement en présence des catalyseurs traités conformément à l'invention. Le solvant choisi peut être ainsi un des solvants suivants utilisés seuls ou en mélange ensemble :
- une essence légère bouillant par exemple entre environ 60 et 95 °C,
- une essence de type hexane bouillant entre 63 et 68 °C environ,
- une essence de type F bouillant entre environ 100 et 160 °C et contenant généralement 10 à 20 % d'hydrocarbures aromatiques, par exemple 15 % en volume,
- une essence de type "white spirit" bouillant entre environ 150 et 250 °C et renfermant généralement 14 à 22 % d'hydrocarbures aromatiques, par exemple 17 % en volume,
- toute coupe hydrocarbonée ou non, équivalente aux essences précédentes,
- ou tout autre solvant organique adapté.

Ultérieurement on a découvert (EP-A-400581) que les qualités des méthodes décrites dans les brevets EP-B-130 850 et EP-B 181 254 de la demanderesse sont encore améliorées si on utilise non pas le polysulfure organique seul mais en mélange, dans des quantités critiques, avec du soufre élémentaire. (L'utilisation de soufre élémentaire seul pour la présulfuration de catalyseurs est décrite dans le brevet USP-4 177 136).

L'emploi simultané de soufre élémentaire apporte une synergie dans la présulfuration hors site quand ce soufre élémentaire est employé en mélange avec un polysulfure organique.

Le soufre élémentaire est utilisé par exemple sous forme de soufre fondu, de soufre en poudre, de soufre en fleur, selon toute méthode adéquate, par exemple celle décrite dans le brevet de la demanderesse EP-B-153 233.

Dans la présente invention, la présulfuration du catalyseur est effectuée soit en présence d'au moins un polysulfure organique, soit en présence de soufre élémentaire, soit à l'aide à la fois d'au moins un polysulfure organique et de soufre élémentaire. De préférence, on utilise un mélange d'au moins un polysulfure organique et de soufre élémentaire. Le solvant utilisé est un white spirit.

Lorsqu'on utilise à la fois un polysulfure organique et du soufre élémentaire, la teneur pondérale en soufre (introduite sur le catalyseur ou incorporée dans la masse catalytique) provenant du polysulfure représente 5 à 75 % par rapport au mélange polysulfure-soufre élémentaire, mais représente de préférence 20 à 60 % et plus particulièrement 25 à 50 % de la teneur totale en soufre. (L'agent de sulfuration renferme environ un mélange de soufre élémentaire et de polysulfure organique tel qu'environ 5 à 75 % du soufre total du mélange appartiennent au polysulfure organique (exprimé en grammes de soufre). Dans les méthodes anciennes, au cours de l'étape de démarrage du catalyseur dans l'unité de la raffinerie, des effets exothermiques parfois importants étaient constatés, que la présente méthode permet d'atténuer. L'existence de réactions exothermiques dans le réacteur est supprimée ou atténuée en opérant selon la présente invention, laquelle consiste à utiliser comme solvant non pas un white spirit utilisé seul mais un mélange adéquat d'un white spirit et d'au moins un composé ou constituant contenant des liaisons carbonées de type oléfinique et notamment par exemple de type triglycéride.

Le dit mélange (ou "mélange solvant") renferme en poids 0,1 à 99,9 % d'un white spirit et 99,9 à 0,1 % du dit composé ou constituant de type oléfinique et de préférence 2 à 98 % d'un white spirit et 2 à 98 % d'au moins le dit composé ou constituant de type oléfinique. Ce constituant peut être un hydrocarbure ou une coupe hydrocarbonée quelconque susceptible de contenir des doubles liaisons. Ce peut être des oléfines (monoléfines, dioléfines ou polyoléfines) ou des coupes pétrolières susceptibles de contenir des oléfines, comme des coupes issues de certains procédés de raffinage pétrolier comme notamment la viscoréduction, la cokéfaction, le craquage à la vapeur. Ce constituant peut être aussi du type triglycéride d'acides gras insaturés comme les huiles végétales.

De préférence, le solvant renferme en poids 4 à 85 % poids, plus particulièrement 6 à 60 % du dit constituant ou composé.

Le dit constituant ou composé ainsi choisi doit de préférence avoir un point d'ébullition supérieur à environ 200 °C, de préférence supérieur à 300 °C. Celui-ci reste donc en majeure partie dans la masse catalytique lorsque celle-ci est traitée dans un four dans le but notamment d'éliminer l'essentiel du white spirit si ce type de solvant a été utilisé conjointement avec le dit constituant.

L'invention est ainsi caractérisée en ce qu'on met le catalyseur en contact avec du soufre élémentaire et un liquide comprenant un agent de sulfuration compris dans le groupe des polysulfures organiques, un solvant de type white spirit, et un composé de type oléfinique, puis le mélange est soumis à un traitement thermique visant d'une part à éliminer le solvant, d'autre part à provoquer notamment une réaction de combinaison entre le soufre élémentaire et les doubles liaisons du composé oléfinique. Le traitement thermique s'effectue à une température supérieure à 100 °C et de préférence supérieure à 120 °C. Le soufre élémentaire est ainsi combiné partiellement ou complètement sous forme d'un polysulfure. Cette réaction est analogue à celle qui est connue dans un tout autre domaine technique, celui de l'industrie des pneumatiques, appellée opération de vulcanisation. Celle-ci, utilisée pour améliorer les propriétés mécaniques du caoutchouc naturel, s'effectue par addition de soufre élémentaire avec le caoutchouc naturel suivie de traitement thermique. Le soufre réagit avec les doubles liaisons du caoutchouc qui est un polyisoprène pour former des ponts mono ou polysulfures entre les chaînes carbonées.

L'invention permet de créer un polysulfure in-situ en recréant les conditions favorables à cette réaction chimique de combinaison de soufre élémentaire avec un composé de type oléfinique. Cette insertion des atomes de soufre entre les chaînes des composés oléfiniques est schématisée sur la figure suivante : 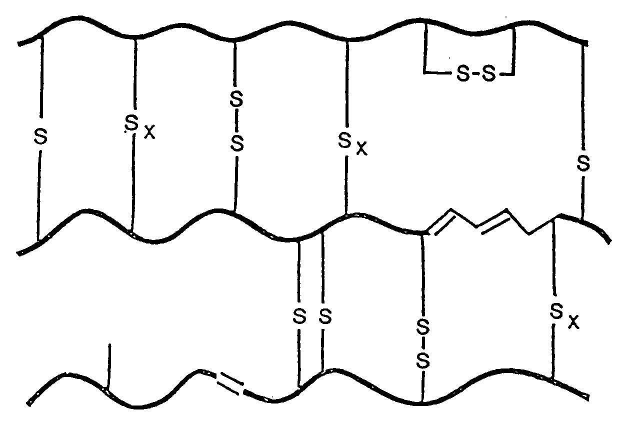
Selon un aspect de l'invention, la combinaison chimique de la coupe oléfinique et du soufre élémentaire peut s'effectuer avant l'incorporation du mélange sur le catalyseur.

Le dit composé utilisé seul ou en mélange avec un solvant hydrocarboné tel qu'un white spirit peut être choisi dans les constituants des huiles végétales appartenant notamment à la famille des triglycérides d'acides gras. Parmi les huiles, on citera notamment celles dérivées d'acides gras insaturés tels que des acides éthyléniques par exemple, les acides myristoleique, palmitoléique, oléique, elaïdique (isomère géométrique de l'acide oléïque), gadoléique, érucique, des acides polyéthyléniques (acides polyéthyléniques des huiles par exemple l'acide linoléique, l'acide linolénique), ces huiles peuvent aussi contenir des acides gras saturés comme par exemple les acides butyrique, caproïque, caprylique, caprique, laurique, myristique, palmitique, stéarique, arachidique. Ainsi le constituant entrant dans la formulation du mélange (mélange-solvant) peut être à base d'ester, d'acide gras lesquels acides contiennent 6 à 24 atomes de carbone et une, deux ou trois liaisons de type oléfinique ou est à base des huiles de colza, d'arachide, de soja, de maïs, de tournesol, de carthane, de palme, de lin, ou de graisses animales de suif ou de saindoux.

Comme indiqué ci-dessus, les huiles préférées sont les huiles de colza, d'arachide, de soja, de maïs, de tournesol, de carthame, de palme, de lin. Les graisses animales comme le suif ou le saindoux peuvent aussi convenir, compte tenu de leur teneur appréciable en acide gras insaturé.

Les triglycérides utilisés ont pour formule générale : 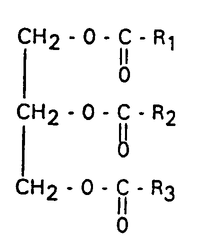
où R₁, R₂, R₃ identiques ou différents sont des radicaux alkyles qui peuvent chacun comporter jusqu'à 24 atomes de carbone et majoritairement jusqu'à 17, et qui comportent des liaisons aliphatiques ou éthyléniques.

A titre d'exemple la formule suivante : 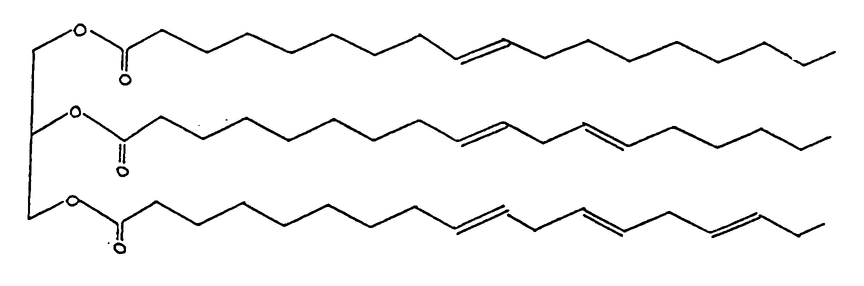
représente schématiquement à la fois trois triglycérides des acides oléique, linoléique et linolénique, c'est-à-dire ayant ici 18 atomes de carbone et respectivement 1, 2 ou 3 doubles liaisons.

**Tableau 1**

| Tableau récapitulatif des essais de présulfuration effectués sur 200 g de catalyseurs de type CoMo | | | | | | | | |
|---|---|---|---|---|---|---|---|---|
| NO. EXEMPLE | 1 | 2 | 3 | 4 | 5 | 6 | 7 | 8 |
| CONFORME OU NON A L'INVENTION | non | non | oui | oui | oui | oui | oui | oui |
| TPS | TPS 37 44,3 g | 0 | 0 | TPS 37 22,2 g | TPS 32 25,6 g | 0 | 0 | 0 |
| SOUFRE ELEMENTAIRE | 0 | 16,5 g | 16,5 g | 8,2 g | 8,2 g | 16,5 g | 16,5 g | 16,5 g |
| WHITE SPIRIT | 53 ml | 98 ml | 75 ml | 56 ml | 53 ml | 45 ml | / | / |
| COUPE OLEFINIQUE | 0 | 0 | huile colza 20 ml | huile colza 20 ml | huile soja 20 ml | essence pyrolyse 50 ml | essence cokefaction retardée 95 ml | 1-tetradecène de ALDRICH (alpha-oléfine) 95 ml |
| COULEUR | noir | gris clair | gris foncé | noir | noir | gris foncé | gris foncé | gris foncé |
| DOC ml 02/g | 7,2 | 6,3 | 6,4 | 7,4 | 7,5 | 6,1 | 7,2 | 7,1 |
| C (% pds) | 6,2 | 0,3 | 7,1 | 10,3 | 10,7 | 17,2 | 13,8 | 14,1 |
| S (% pds) | 7,5 | 8,1 | 7,0 | 6,9 | 7,1 | 6,6 | 6,9 | 7,0 |
| EXOTHERMES | courbe 1 | courbe 2 | courbe 3 | courbe 4 | courbe 5 | courbe 6 | courbe 7 | courbe 8 |

Les caractéristiques de l'invention sont illustrées dans les quelques exemples présentés ci-après.
Les essais de présulfuration sont effectués sur un catalyseur d'hydrotraitement de coupes pétrolières contenant un mélange d'oxydes de cobalt et de molybdène sur un support d'alumine ; les caractéristiques du catalyseur sont les suivantes :

| | |
|---|---|
| - teneur en cobalt: | 3,0 % poids, |
| - teneur en molybdène: | 9,0 % poids, |
| - surface spécifique: | 230 m²/g, |
| - volume poreux total: | 0,52 ml/g |

Ce solide est soumis dans les exemples suivants à différents essais de présulfuration, avec récapitulation sur le Tableau 1.

### Exemple 1 (exemple comparatif) :

Le solide est imprégné par une solution d'un mélange de ditertiononylpolysulfure en solution dans du white spirit. 200 g de catalyseur sont disposés dans un drageoir rotatif. 44,3 g de ditertiononyl polysulfure (origine ATOCHEM, nom de marque TPS 37, teneur en soufre 37 % poids) sont mélangés avec 53 ml de white spirit de points d'ébullition initial et final respectivement 140 à 180 °C. Cette solution limpide est imprégnée à sec sur le catalyseur pendant 10 minutes. Le solide est ensuite placé dans un évaporateur de type Soxhlet où le ballon trempe dans un bain d'huile porté à 125 °C. On y applique un vide primaire (pression 5 kPa) pendant une heure de façon à ce que le solvant s'évapore. Le solide résultant est de couleur noire ; il contient 6,2 % C et 7,5 % de S (en poids). Ce solide ainsi préparé, grâce à l'addition de soufre et au traitement thermique contient un mélange d'oxysulfures de cobalt et de molybdène.

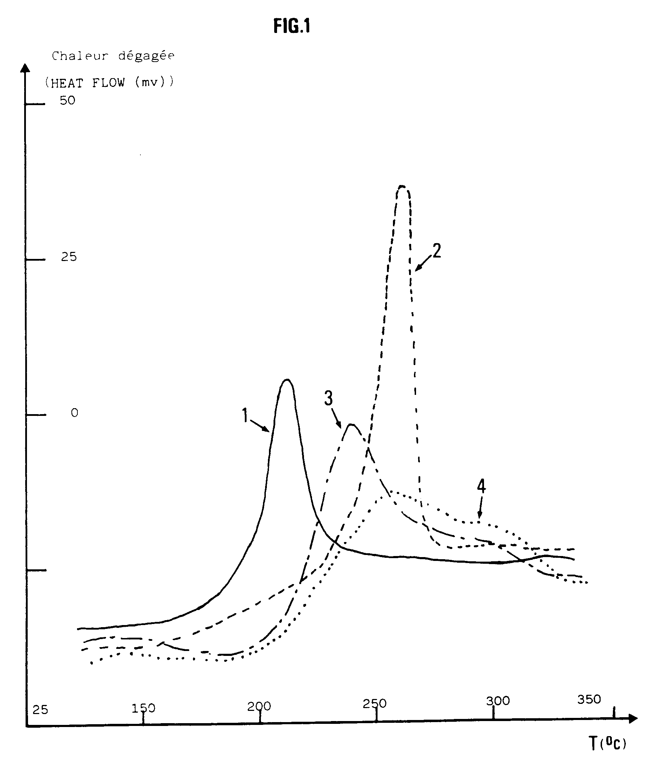

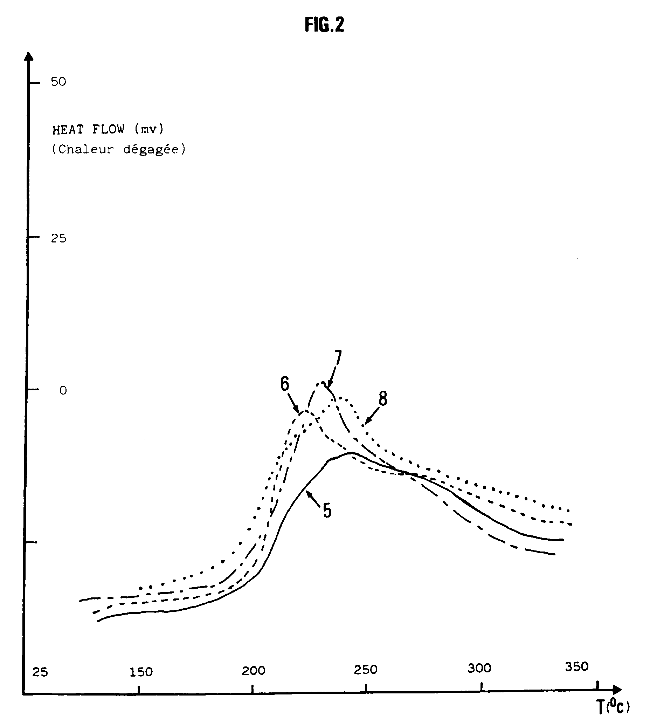

La forme active du catalyseur pour l'hydrotraitement des coupes pétrolières est un mélange intime de sulfures de cobalt et de molybdène. Cette transformation s'effectue ultérieurement sous hydrogène à chaud. Le solide est donc placé dans un réacteur tubulaire, soumis à un flux d'hydrogène de 0,1 litre heure ⁻¹ gramme ⁻¹ et chauffé jusqu'à 320 °C. On applique ensuite une technique de chimisorption d'oxygène, appellée en anglais Dynamic Oxygen Chimisorption (DOC), qui permet de mesurer la quantité d'oxygène adsorbé à froid sur ce catalyseur sulfuré. Cette technique permet une bonne évaluation de l'activité catalytique de ces catalyseurs à base de sulfures dans l'hydrotraitement des charges pétrolières. Dans ce cas, la quantité d'oxygène chimisorbée est de 7,2 ml d'oxygène par gramme de catalyseur. La quantité de chaleur dégagée lors du traitement sous hydrogène est évaluée par Analyse Thermique Différentielle, les courbes étant montrées dans les figures 1 et 2.

### Exemple 2 (comparatif) :

Le catalyseur utilisé dans l'exemple 1 est présulfuré de la façon suivante : il est imprégné par 98 ml de white spirit. Le white spirit est alors évaporé dans les conditions indiquées à l'exemple 1. Puis mécaniquement les 200 g de catalyseurs sont mélangés intimement avec 16,5 g de soufre élémentaire. On poursuit alors le traitement du catalyseur comme indiqué dans l'exemple 1. Les pourcentages de C, S et la quantité d'oxygène chimisorbée sont donnés dans le Tableau 1.

### Exemple 3 (selon l'invention) :

On opère comme dans l'exemple 2 mais ici le solvant avec lequel on imprègne le catalyseur renferme 75 ml de white spirit et 20 ml d'huile de colza. Le white spirit est alors évaporé dans les conditions indiquées à l'exemple 1. Au cours de cette évaporation, la majeure partie de l'huile de colza reste imprégnée dans la masse catalytique. Les résultats sont reportés dans le Tableau 1.

### Exemple 4 (selon l'invention) :

On opère comme dans l'exemple 1 en utilisant d'une part 22,2 g de TPS 37 (au lieu de 44,3 g) et 8,2 g de soufre élémentaire. Ce soufre est dispersé mécaniquement grâce à une agitation énergique dans le mélange des 22,2 g de TPS 37, les 56 ml de white spirit, les 20 ml d'huile de colza. Les résultats obtenus sont reportés dans le Tableau 1.

### Exemple 5 (selon l'invention) :

On répète l'exemple 4 en remplaçant le TPS 37 par du TPS 32 et en remplaçant les 20 ml de colza par 20 ml de soja.

### Exemple 6 (selon l'invention) :

On procède comme dans l'exemple 3. Mais ici le solvant utilisé est un mélange de 45 ml de white spirit et de 50 ml d'une essence de pyrolyse (ou "steam cracking") dont la composition est la suivante: 13 % de paraffines, 50 % d'aromatiques, 12 % d'oléfines, 25 % de dioléfines et d'alkényl aromatiques.

### Exemple 7 (selon l'invention) :

On opère comme dans l'exemple 2, avec les variantes suivantes : on utilise comme solvant, 95 ml d'une essence de cokéfaction retardée dont la composition est la suivante : 51 % de paraffines, 10 % d'aromatiques, 35 % d'oléfines, 4 % de diolefines et d'alkémyl aromatiques au lieu de 98 ml de white spirit. Après avoir traité le catalyseur dans les conditions nécessaires à l'évaporation de white spirit (bien que ce solvant soit absent ici) on opère un mélange du catalyseur avec 16,5 g de soufre élémentaire. Les résultats sont donnés dans le Tableau 1.

### Exemple 8 (selon l'invention) :

On opère comme dans l'exemple 7 mais en remplaçant l'essence de cokéfaction retardée par du 1-tétradécène. Les résultats sont donnés dans le Tableau 1.

Les figures 1 et 2 présentent des courbes d'analyse thermique différentielle obtenues sur une thermobalance de type SETARAM. Ces courbes montrent pour chaque exemple (courbes 1 à 8 correspondant respectivement aux exemples 1 à 8) la variation de la chaleur dégagée en présence d'hydrogène en fonction de la température. Les exemples 1 et 2 non conformes à l'invention montrent des exothermes importants, qui ne se produisent pas avec la même intensité dans les exemples selon l'invention.

### Exemple 9 :

On répète l'exemple 4 en utilisant successivement à la place d'huile de colza, de l'huile de soja, d'arachide, d'olive, d'oléagineux, palmitique et oléique. On obtient sensiblement les mêmes résultats, avec toutefois une préférence pour l'huile de colza, puis l'huile de soja.

## Revendications

1. Procédé de traitement d'un catalyseur neuf ou régénéré renfermant un support à base d'au moins un oxyde d'un métal ou d'un métalloide et au moins un métal actif, réalisé en l'absence d'hydrogène et consistant à traiter le dit catalyseur à l'aide d'au moins un agent de sulfuration le dit agent étant choisi dans le groupe constitué parmi le soufre élémentaire et les polysulfures organiques de formule : R-S₍ₙ₎-R', où n est un nombre entier de 3 à 20 et où les radicaux R et R', identiques ou différents, représentent chacun un radical organique renfermant 1 à 150 atomes de carbone par molécule, ces radicaux étant choisis dans le groupe constitué par les radicaux alkyles, saturés ou insaturés, linéaires ou ramifiés, ou de type naphénique, les radicaux aryles, les radicaux alkylaryles et les radiaux arylalkyles, R' pouvant aussi représenter l'atome d'hydrogène, le procédé étant caractérisé en ce qu'un mélange (ou "mélange-solvant") est utilisé pour l'introduction de l'agent de sulfuration, le dit mélange renfermant au moins un constituant (ou composé) contenant des liaisons carbonées de type oléfinique et un white spirit.

2. Procédé selon la revendication 1 dans lequel la teneur pondérale en le dit ou les dits constituant(s) ou composé(s) dans le dit mélange est comprise entre 0,1 et 99,9 %.

3. Procédé selon la revendication 2 dans lequel le dit mélange renferme d'une part 2 à 98 % en poids d'un white spirit et d'autre part 2 à 98 % en poids du dit ou des dits composé(s) ou constituant(s).

4. Procédé selon l'une des revendications 2 et 3 dans lequel au moins un constituant entrant dans la formulation du mélange est choisi dans le groupe constitué par les huiles dérivées des acides gras (triglycérides d'acides gras), saturés ou insaturés et les composés analogues.

5. Procédé selon la revendication 4 dans lequel au moins un constituant entrant dans la formulation du mélange est à base d'ester d'acide gras, lesquels acides contiennent 6 à 24 atomes de carbone et une, deux ou trois liaisons de type oléfinique ou est à base des huiles de colza, d'arachide, de soja, de maïs, de tournesol, de carthane, de palme, de lin ou des graisses animales de suif ou de saindoux.

6. Procédé selon l'une des revendications 1 à 3 dans lequel au moins un constituant entrant dans la formulation du mélange appartient aux coupes pétrolières renfermant au moins un effluent issu de cokéfaction retardée ("delayed coking"), de viscoréduction ("visbreaking"), de craquage à la vapeur (steam cracking).

7. Procédé selon l'une des revendications 1 à 6 dans lequel au moins un constituant entrant dans la formulation du solvant est une mono-oléfine, une dioléfine, une polyoléfine ou un mélange de mono-di ou poly-oléfines.

8. Procédé selon l'une des revendications 1 à 7 dans lequel le dit mélange renferme 4 à 85 % d'au moins le dit constituant (en poids).

9. Procédé selon l'une des revendications 1 à 8 dans lequel l'agent de sulfuration est le soufre élémentaire.

10. Procédé selon l'une des revendications 1 à 8 dans lequel l'agent de sulfuration est un produit de formule R-S₍ₙ₎-R'.

11. Procédé selon l'une des revendications 1 à 8 dans lequel l'agent de sulfuration est un mélange de soufre élémentaire et d'un produit de formule R-S₍ₙ₎-R'.

12. Procédé selon la revendication 11 dans lequel 5 à 75 % en poids du soufre incorporé dans la masse catalytique provient du produit de formule R-S₍ₙ₎-R'.

13. Procédé selon l'une des revendications 1 à 12 dans lequel le dit constituant du dit solvant bout au dessus de 200 °C environ.

## Claims

1. Process for the treatment of a new or regenerated catalyst containing a support based on at least one oxide of a metal or a metalloid and at least one active metal, performed in the absence of hydrogen and consisting of treating said catalyst with the aid of at least one sulphurizing agent, said agent being chosen from within the group constituted by elementary sulphur and organic polysulphides of formula R-S₍ₙ₎-R', in which n is an integer from 3 to 20 and in which R and R', which are the same or different, in each case represent an organic radical containing 1 to 150 carbon atoms per molecule, said radicals being chosen from within the group constituted by alkyl radicals, in saturated or unsaturated, straight or branched form, or of the naphthene type, aryl radicals, alkyl aryl radicals and aryl alkyl radicals and R' can also represent the hydrogen atom, the process being characterized in that a mixture (or mixture-solvent) is used for introducing the sulphurizing agent, said mixture containing at least one constituent or compound containing the olefin-type carbon bonds and a white spirit.

2. Process according to claim 1, wherein the weight content of said constituent(s) or compound(s) in the said mixture is between 0.1 and 99.9%

3. Process according to claim 2, wherein said mixture contains on the one hand 2 to 98% by weight of a white spirit and 2 to 98% by weight of said compound(s) or constituent(s).

4. Process according to either of the claims 2 and 3, wherein at least one constituent entering in the formulation of the mixture is chosen from within the group constituted by oils derived from fatty acids (fatty acid triglycerides), which are in saturated or unsaturated form and similar compounds.

5. Process according to claim 4, wherein at least one constituent entering in the formulation of the mixture is based on fatty acid esters, said acids containing 6 to 24 atoms of carbon and 1,2 or 3 olefin-type bonds, or based on colza, peanut, soybean, corn, sunflower, safflower, palm or linseed oils, or animal fats such as suet or lard.

6. Process according to one of the claims 1 to 3, wherein at least one constituent entering in the formulation of the mixture belongs to the petroleum fractions containing at least one effluent resulting from delayed coking, viscoreduction (visbreaking) or steam cracking.

7. Process according to one of the claims 1 to 6, wherein at least one constituent entering into the formulation of the solvent is a monoolefin, diolefin, polyolefin or a mono-di or poly-olefin mixture.

8. Process according to one of the claims 1 to 7, wherein said mixture contains 4 to 85% by weight of at least the said constituent.

9. Process according to one of the claims 1 to 8, wherein the sulphurizing agent is elementary sulphur.

10. Process according to one of the claims 1 to 8, wherein the sulphurizing agent is a product of formula R-S₍ₙ₎-R'.

11. Process according to one of the claims 1 to 8, wherein the sulphurizing agent is a mixture of elementary sulphur and a product of formula R-S₍ₙ₎-R'.

12. Process according to claim 11, wherein 5 to 75% by weight of sulphur incorporated into the catalytic material comes from the product of formula R-S₍ₙ₎-R'.

13. Process according to one of the claims 1 to 12, wherein the constituent of said solvent boils at above approximately 200°C.

## Patentansprüche

1. Verfahren zur Behandlung eines neuen oder regenerierten Katalysators, der einen Träger auf der Grundlage von mindestens einem Metall- oder Metalloidoxid und mindestens ein aktives Metall umfaßt, das in Abwesenheit von Wasserstoff durchgeführt wird und darin besteht, daß der besagte Katalysator mittels mindestens eines Sulfidierungsmittels behandelt wird, wobei das besagte Mittel aus der von elementarem Schwefel und den organischen Polysulfiden der Formel: R-S₍ₙ₎-R' gebildeten Gruppe gewählt wird, wobei n eine ganze Zahl zwischen 3 und 20 ist und in der die Reste R und R', identisch oder voneinander verschieden, jeweils einen organischen Rest mit 1 bis 150 Kohlenstoffatomen pro Molekül darstellen, diese Reste werden aus der von gesättigten oder ungesättigten, linearen oder verzweigten oder naphthenischen Alkylresten, den Arylresten, den Alkylarylresten und den Arylalkylresten gebildeten Gruppe gewählt, wobei R' auch ein Wasserstoffatom darstellen kann, das Verfahren ist dadurch gekennzeichnet, daß ein Gemisch (oder "Gemisch/Lösungsmittel") verwendet wird, um das Sulfidierungsmittel einzuführen, wobei das besagte Gemisch mindestens eine Komponente (oder eine Verbindung) umfaßt, die olefinische Kohlenstoffverbindungen enthält, und einen White Spirit.

2. Verfahren gemäß Anspruch 1, bei dem der Gewichtsanteil der Komponente(n) oder der Verbindung(en) in dem besagten Gemisch zwischen einschließlich 0,1 und 99,9 % liegt.

3. Verfahren gemäß Anspruch 2, bei dem das besagte Gemisch einerseits 2 bis 98 Gew.-% eines White Spirit und andererseits 2 bis 98 Gew.-% der Komponente(n) oder der Verbindung(en) enthält.

4. Verfahren gemäß einem der Ansprüche 2 und 3, in dem mindestens eine an der Formulierung des Gemisches beteiligte Komponente aus der von den Ölen, die von den gesättigten oder ungesättigten Fettsäuren abgeleitet sind (Fettsäuretriglyceride) und den analogen Verbindungen gebildeten Gruppe gewählt wird.

5. Verfahren gemäß Anspruch 4, bei dem mindestens eine an der Formulierung des Gemisches beteiligte Komponente auf einem Fettsäureester basiert, wobei die Fettsäuren zwischen 6 und 24 Kohlenstoffatome und eine, zwei oder drei olefinische Bindungen enthalten, oder auf Rapsöl, Erdnußöl, Sojaöl, Maisöl, Sonnenblumenöl, Distelöl, Palmöl, Leinöl oder den tierischen Fetten wie Talg oder Schweineschmalz basiert.

6. Verfahren gemäß einem der Ansprüche 1 bis 3, bei dem mindestens eine an der Formulierung des Gemisches beteiligte Komponente aus Erdölschnitten stammt, die mindestens einen Austragsstoff aus der verzögerten Verkokung ("delayed coking"), der Verringerung der Viskosität ("Visbreaking"), des Dampfcrackens ("Steamcracking") umfassen.

7. Verfahren gemäß einem der Ansprüche 1 bis 6, bei dem mindestens eine an der Formulierung des Gemisches beteiligte Komponente ein Monoolefin, ein Diolefin, ein Polyolefin oder ein Gemisch aus Mono-, Di- oder Polyolefinen ist.

8. Verfahren gemäß einem der Ansprüche 1 bis 7, bei dem das besagte Gemisch 4 bis mindestens 85 Gew.-% der besagten Komponente umfaßt.

9. Verfahren gemäß einem der Ansprüche 1 bis 8, bei dem das Sulfidierungsmittel elementarer Schwefel ist.

10. Verfahren gemäß einem der Ansprüche 1 bis 8, bei dem das Sulfidierungmittel ein Produkt der Formel R-S₍ₙ₎-R' ist.

11. Verfahren gemäß einem der Ansprüche 1 bis 8, bei dem das Sulfidierungsmittel ein Gemisch aus elementarem Schwefel und einem Produkt der Formel R-S₍ₙ₎-R' ist.

12. Verfahren gemäß Anspruch 11, bei dem 5 bis 75 Gew.-% des in die katalytische Masse eingeführten Schwefels von dem Produkt der Formel R-S₍ₙ₎-R' stammen.

13. Verfahren gemäß einem der Ansprüche 1 bis 12, bei dem die besagte Komponente des besagten Lösungsmittels unterhalb von etwa 200 °C siedet.
